# EUROPEAN PATENT APPLICATION

(11) **EP 2 980 471 A1**
(43) Date of publication of application: **03.02.2016**
(21) Application number: 14772771.3
(22) Date of filing: 25.03.2014
(51) Int. Cl.: F21V 8/00, B23K 26/364, B23K 26/38, B29C 47/08, F21S 8/04, G02B 6/00, G02B 6/42

(54) **LIGHT GUIDE MEMBER, AND PRODUCTION METHOD FOR LIGHT GUIDE MEMBER**

(30) Priority: 29.03.2013 JP 2013074554; 10.01.2014 JP 2014002905
(71) Applicant: Panasonic Intellectual Property Management Co., Ltd., Osaka-shi, Osaka 540-6207 (JP)
(72) Inventor: NAKAI, Takashi, Osaka 540-6207 (JP); OBATA, Yoshio, Osaka 540-6207 (JP); KONDO, Tatsuhiko, Osaka 540-6207 (JP); ONO, Tatsuji, Osaka 540-6207 (JP); KOIZUMI, Hideki, Osaka 540-6207 (JP); TANAKA, Toshihiro, Osaka 540-6207 (JP); ISHIDUKA, Mamoru, Osaka 540-6207 (JP); ITO, Takeshi, Osaka 540-6207 (JP)
(74) Representative: Müller-Boré & Partner Patentanwälte PartG mbB
(86) International application number: PCT/JP2014/001685
(87) International publication number: WO 2014/156113

(57) **Abstract**

A light guide member (1) has an elongated shape. At least one of opposite end surfaces (402A, 402B) in a longitudinal direction of the light guide member serves as a light entrance surface (10A, 10B) to be struck by light. The light guide member is an extruded product formed by extruding synthetic resin. The light entrance surface is a cut surface resulting from laser cutting on the extruded product. With this configuration, light guide members of different lengths can be produced by simply changing a cutting position of the extruded product formed by the extrusion. Therefore, it is possible to suppress increase in a production cost of the light guide members. Also, forming the light entrance surface through the laser cutting enables the light entrance surface to be smooth. Therefore, it is possible to suppress occurrence of diffused reflection of light at the light entrance surface.

## Description

### TECHNICAL FIELD

The invention relates generally to a light guide member and a production method for the light guide member and more particularly, to a light guide member allowing light to enter through an end surface thereof in a longitudinal direction and to emerge outside through a surface thereof extending along the longitudinal direction, and a production method for the light guide member.

### BACKGROUND ART

A light guide member is disclosed in JP 2005-198106 A. This light guide member is in a bar shape and constructed so that light entering through an end surface of the light guide member in a longitudinal direction is reflected by a bottom surface extending along the longitudinal direction, and the reflected light is allowed to emerge outside through an top surface extending along the longitudinal direction.

Incidentally, for producing light guide members having bar shapes and different lengths by injection molding of synthetic resin, different molds are required for the light guide members in each length. This might increase production cost.

In a case where extrusion is used for the production of light guide members, light guide members having different lengths can be produced by cutting an extruded product with a cutting blade or the like. In such light guide members, the cut surface would be used as a light entrance surface which will be struck by light, but the cut surface of each of the light guide members is rough because the cut surface was a resultant surface of cutting by a cutting blade or the like. Since that, light emitted from a light source might be reflected by fine irregularities existing on the cut surface upon reaching the light entrance surface. For solving this problem, polishing the cut surface can be considered. However, the polishing process requires labor and causes increase in the production cost as well.

### DISCLOSURE OF THE INVENTION

It is an object of the present invention to provide a light guide member, which can suppress its production cost and suppress occurrence of diffused reflection of light at a light entrance surface.

A light guide member in accordance with the present invention includes the following first aspect. The light guide member has an elongated shape. The light guide member has opposite end surfaces in a longitudinal direction of the light guide member, and at least one of the opposite end surfaces serves as a light entrance surface to be struck by light. The light guide member is of an extruded product formed by extruding synthetic resin. The light entrance surface is a cut surface resulting from laser cutting on the extruded product.

The light guide member in accordance with the present invention includes the following second aspect realized in combination with the first aspect. The light guide member includes a reflective surface and a light exit surface. The reflective surface extends along the longitudinal direction of the light guide member and is for reflecting light entering the light guide member through the light entrance surface. The light exit surface extends along the longitudinal direction of the light guide member and is for allowing light, reflected by the reflective surface, to emerge outside. The reflective surface includes a diffusing part for diffusing light. The diffusing part includes an irregular part resulting from laser irradiation on part of the reflective surface.

Also, a production method for the light guide member in accordance with the present invention includes the following third aspect. The production method is for the light guide member including the first or second aspect. The production method includes an extrusion step and a cutting step. In the extrusion step, the extruded product is molded by extrusion. In the cutting step, the light guide member having a desired length is produced by conducting laser cutting to cut the extruded product molded in the extrusion step with the laser.

Also, the production method for the light guide member in accordance with the present invention includes the following fourth aspect realized in combination with the third aspect. The laser cutting of the cutting step is conducted along with the extrusion step. That is, the laser cutting of the cutting step and the extrusion step are conducted in parallel. Also, the cutting with the laser is conducted to the extruded product which is being extruded from an extruder continuously.

Also a production method for the light guide member in accordance with the present invention includes the following fifth aspect. The production method is for the light guide member including the second aspect. The production method includes an extrusion step, a diffusing part forming step, and a cutting step. In the extrusion step, the extruded product is molded by extrusion. In the diffusing part forming step, the irregular part is formed by laser irradiation on part of a surface, which constitutes the reflective surface of the light guide member, of the extruded body. In the cutting step, the light guide member having a desired length is produced by cutting the extruded product with laser.

Also, the production method for the light guide member in accordance with the present invention includes the following sixth aspect realized in combination with the fifth aspect. The laser irradiation of the diffusing part forming step is conducted along with the extrusion step. That is, the laser irradiation of the diffusing part forming step is conducted to the extruded product which is being extruded continuously in the extrusion step.

Also, the production method for the light guide member in accordance with the present invention includes the following seventh aspect realized in combination with the sixth aspect. In the diffusing part forming step, the laser irradiation on the surface, constituting the reflective surface of the light guide member, of the extruded product, is conducted so as to form a plurality of cut grooves.

Any of the second to seventh aspects can be added to the first aspect optionally.

According to the present invention, the light guide member can be produced by extrusion and the light guide members of different lengths can be produced by simply changing a cutting position of the extruded product formed by the extrusion. In this way, there is no need to prepare two or more dies for producing light guide members in different lengths, unlike a case of producing light guide members by an injection molding. Therefore, it is possible to suppress increase in a production cost of the light guide members. Also, forming the light entrance surface through the laser cutting enables the light entrance surface to be smooth. Therefore, it is possible to suppress occurrence of diffused reflection of light at the light entrance surface.

### BRIEF DESCRIPTION OF THE DRAWINGS

Preferred embodiments of the present invention will now be described in further details. Other features and advantages of the present invention will become better understood with regard to the following detailed description and accompanying drawings where:
Fig. 1 is a perspective view illustrating a light guide member of a first embodiment,
Fig. 2 is an explanatory diagram of a lighting device which includes the light guide member of the first embodiment,
Fig. 3 is an explanatory diagram showing a state where the lighting device of the first embodiment is installed,
Fig. 4 is a sectional view of the light guide member of the first embodiment,
Fig. 5 is a bottom view of a light exit surface of an example of the first embodiment,
Fig. 6 is a sectional side view around a light exit surface of another example of the first embodiment,
Fig. 7 is a sectional view of a light guide member of another example of the first embodiment,
Fig. 8 is an explanatory diagram of a manufacturing apparatus for the light guide member of the first embodiment,
Fig. 9 is a perspective view of a light guide member of a second embodiment,
Fig. 10 is a front view of the light guide member of the second embodiment,
Fig. 11 is an explanatory diagram of a lighting device which includes the light guide member of the second embodiment,
Fig. 12 is an explanatory diagram of a manufacturing apparatus for the light guide member of the second embodiment,
Fig. 13 is an explanatory diagram showing a forming process of a diffusing part of the light guide member of the second embodiment, and
Fig. 14A is an explanatory diagram showing a space of the light guide member of the second embodiment, and Fig. 14B is an explanatory diagram showing a space of a light guide member of a referential example.

### DESCRIPTION OF EMBODIMENTS

The following describes an embodiment of the present invention with reference to attached drawings.

### (First embodiment)

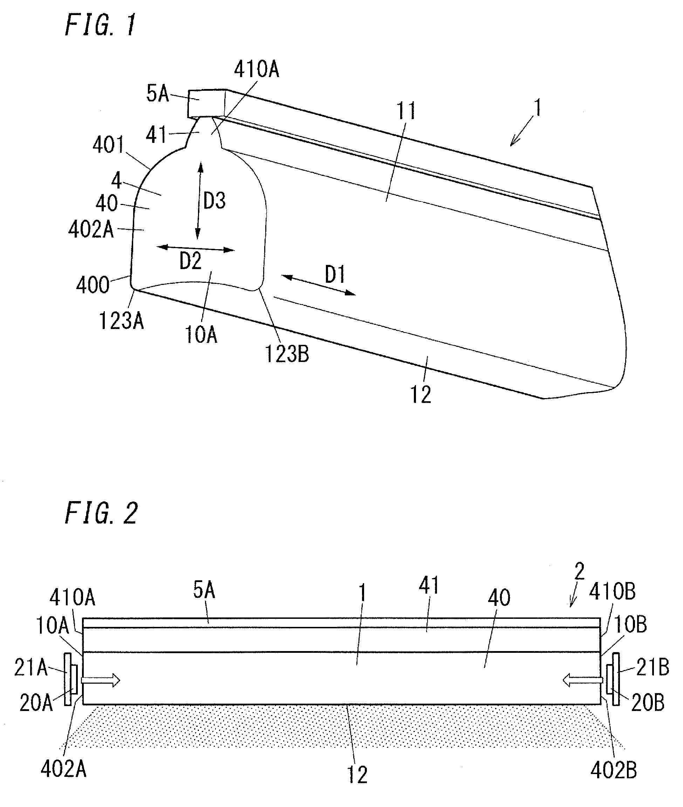

A light guide member 1 shown in Fig. 1 is used for example as a part of a lighting device. A lighting device 2 which includes the light guide member 1 of the present embodiment is shown in Fig. 2.

The lighting device 2 is provided, for example, on a ceiling, a wall, a floor, or an installed object such as a cabinet, or a panel, of a room. The lighting device 2 includes the light guide member 1, a pair of control substrates 21A and 21B, and a pair of light sources 20A and 20B.

As shown in Fig. 1, the light guide member 1 has an elongated shape extending in one direction. In more detail, the light guide member 1 has a straight bar shape. Hereinafter, a direction orthogonal to a longitudinal direction of the light guide member 1 is referred to as a width direction, and a direction orthogonal to both the longitudinal direction and the width direction of the light guide member 1 is referred to as a height direction. That is, in Fig. 1, a direction indicated by an arrow D1 corresponds to the longitudinal direction of the light guide member 1, a direction indicated by an arrow D2 corresponds to the width direction of the light guide member 1, and a direction indicated by an arrow D3 corresponds to the height direction of the light guide member 1.

The light guide member 1 includes a light entrance surface 10A, a reflective surface 11, and a light exit surface 12. The light guide member 1 of the present embodiment further includes a light entrance surface 10B (see Fig. 2). Hereinafter, the light entrance surface 10A and the light entrance surface 10B may be referred to as the first light entrance surface 10A and the second light entrance surface 10B, respectively.

As shown in Fig. 2, the first light entrance surface 10A is one end surface of the light guide member 1 in the longitudinal direction. The second light entrance surface 10B is an end surface on an opposite end of the light guide member 1 in the longitudinal direction from the first light entrance surface 10A. That is, light entering parts are provided on both ends in the longitudinal direction of the light guide member 1 of the present embodiment. However, the end surface on the opposite end of the light guide member 1 in the longitudinal direction from the first light entrance surface 10A is not limited to be designed to serve as the second light entrance surface 10B.

The reflective surface 11 and the light exit surface 12 are surfaces extending along the longitudinal direction of the light guide member 1. The light exit surface 12 of the present embodiment is a surface on one side in the height direction (thickness direction) of the light guide member 1. In the embodiment, the reflective surface 11 is a part of an outer peripheral surface of the light guide member 1, and is defined as part of the outer peripheral surface of the light guide member, excluding the light exit surface 12.

A light emitting method of the lighting device 2 is so called edge light type. That is, as shown in Fig. 2, the lighting device 2 emits light from the light exit surface 12 which is a surface of the light guide member 1 extending in the longitudinal direction of the light guide member 1 when light is irradiated on the first light entrance surface 10A or the second light entrance surface 10B.

A control substrate 21A which is one of the pair of control substrates 21A and 21B of the lighting device 2 is provided at a position facing the light entrance surface 10A, and a control substrate 21B which is the other of them is provided at a position facing the light entrance surface 10B. In other words, the control substrate 21A and the control substrate 21B are provided on opposite sides of the light guide member 1 in the longitudinal direction, respectively.

Hereinafter, a light source 20 A which is one of the pair of light sources 20A and 20B of the lighting device 2 may be referred to as a first light source 20A, and a light source 20B which is the other of them may be referred to as a second light source 20B. Each of the light source 20A and the light source 20B is for example a light emitting diode. The first light source 20A is mounted on the control substrate 21A, and the second light source 20B is mounted on the control substrate 21B. Accordingly, the first light source 20A is provided on a side of one end of the light guide member 1 in the longitudinal direction, and the second light source 20B is provided on a side of the other end of the light guide member 1 in the longitudinal direction. The first light source 20A faces the first light entrance surface 10A. The second light source 20B faces the second light entrance surface 10B.

The first light source 20A is electrically connected to a circuit provided on the control substrate 21A. The first light source 20A emits light when receiving electric power through the circuit on the control substrate 21A. The second light source 20B is electrically connected to a circuit provided on the control substrate 21B. The second light source 20B emits light when receiving electric power through the circuit on the control substrate 21B. Both of the light source 20A and the light source 20B are configured to emit light simultaneously in use of the lighting device 2.

The light emitted from the first light source 20A enters the light guide member 1 through the first light entrance surface 10A corresponding thereto. The light emitted from the second light source 20B enters the light guide member 1 through the second light entrance surface 10B corresponding thereto. Light entered the light guide member 1 through the light entrance surfaces 10A and 10B as described is reflected by the reflective surface 11 toward the light exit surface 12 while advancing through the interior of the light guide member 1 toward substantially the opposite end surface in the longitudinal direction. Then the light reflected by the reflective surface 11 as described exits through an entire part of the light exit surface 12. In this way, the light exit surface 12 emits light in a band-like manner. Note that the lighting device 2 can be a device having only one of the light sources 20A and 20B.

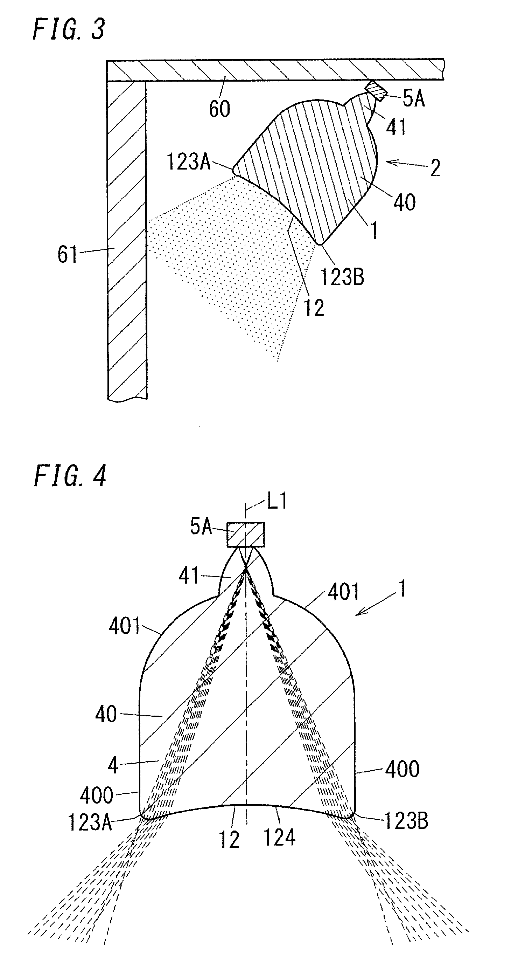

The lighting device 2 is installed along a corner defined by a wall 61 and a ceiling 60 of a building as an example shown in Fig. 3. The light guide member 1 of this lighting device 2 is at right under the ceiling 60. Also, the light guide member 1 is arranged so that the light exit surface 12 is directed obliquely downward and faces the wall 61. The lighting device 2 shown in Fig. 3 is used as an indoor lighting device and illuminates the wall 61 with the light emitted through the light exit surface 12.

Hereinafter the light guide member 1 and the lighting device 2 are explained in detail. As shown in Fig. 1, the light guide member 1 includes a transparent part 4 and a diffusing part 5A. The light guide member 1 of the present embodiment includes only the transparent part 4 and the diffusing part 5A. The transparent part 4 and the diffusing part 5A are arranged in the height direction of the light guide member 1.

The transparent part 4 has an elongated shape extending in the longitudinal direction of the light guide member 1. The diffusing part 5A is provided on a surface extending along the longitudinal direction of the transparent part 4.

The light guide member 1 is made of synthetic resin. The light guide member 1 is formed by an extrusion. The light guide member 1 of the present embodiment is produced by a double extrusion (co-extrusion) using a synthetic resin material for the transparent part 4 and a synthetic resin material for the diffusion part 5A.

The synthetic resin material for the transparent part 4 has a translucency (optical transparency). The synthetic resin material for the transparent part 4 is PMMA (polymethylmethacrylate), or PMMA with any one of or combination of PMA (poly(methyl acrylate)) and acrylic rubber. PMA and acrylic rubber have substantially same refractive index of light with PMMA thus less likely to spoil transparency of the light guide member 1. Further, it is possible to improve formability and shock resistance of the light guide member 1.

The synthetic resin material for the diffusion part 5A is for example, a material containing: the same synthetic resin material for the transparent part 4; and titanium oxide or the like for coloring. That is, the synthetic resin material for the diffusion part 5A is a material in which titanium oxide or the like is added to a main component which is PMMA or PMMA with any one of or combination of PMA and acrylic rubber.

Note, the synthetic resin material for the diffusion part 5A can be a material containing: synthetic resin material different from the synthetic resin material for the transparent part 4; and titanium oxide or the like for coloring. For example, materials containing: ABS (acrylonitrile butadiene styrene), ASA (Acrylonitrile Styrene Acrylate resin), polyvinyl chloride, polyester, polyolefin, polyamide or the like; and titanium oxide or the like for coloring can be used as the synthetic resin material for the diffusion part 5A. The material for the transparent part 4 and the material for the diffusion part 5A may be other material such as polycarbonate or the like.

The synthetic resin material for the transparent part 4 and the synthetic resin material for the diffusion part 5A have different refractive indices of light so that a reflectance of the diffusion part 5A is higher than that of the transparent part 4.

As shown in Fig. 1, a cross section of the light guide member 1 orthogonal to the longitudinal direction thereof is uniform in the longitudinal direction of the light guide member 1. Also, as shown in Fig. 4, the cross section of the light guide member 1 orthogonal to the longitudinal direction thereof is symmetry with respect to a central line L1 which passes through a center of the light guide member 1 in the with direction.

The transparent part 4 has a wide part 40 and a narrow part 41. The transparent part 4 of the present embodiment only includes the wide part 40 and the narrow part 41.

A width of the wide part 40 is wider than that of the narrow part 41. The wide part 40 has a larger area in the cross section orthogonal to the longitudinal direction of the light guide member than the narrow part 41. The narrow part 41 is projected from an end part on a side of the diffusion part 5A of the wide part 40, from a center portion in a width length of the wide part 40. A projection direction of the narrow part 41 is parallel to the height direction of the light guide member 1.

As shown in Fig. 2, the light entrance surface 10A includes an end surface 402A in a longitudinal direction of the wide part 40 and an end surface 410A in a longitudinal direction of the narrow part 41 which is in a same surface level as the end surface 402A. Also, the light entrance surface 10B includes an end surface 402B which is an opposite surface of the wide part 40 from the end surface 402A in the longitudinal direction, and an end surface 410B which is an opposite surface of the narrow part 41 from the end surface 410A and is in a same surface level as the end surface 402B.

The light entrance surfaces 10A and 10B are orthogonal to the longitudinal direction of the transparent part 4 (the longitudinal direction of the light guide member 1). The light entrance surfaces 10A and 10B are smooth surfaces with small irregularity made by a laser cutting.

The light sources 20A and 20B are positioned so that those overlap with the wide part 40 in the longitudinal direction of the light guide member 1. That is, the first light source 20A faces an end surface in the longitudinal direction of the wide part 40, which is a part of the first light entrance surface 10A. The second light source 20B faces an end surface in the longitudinal direction of the wide part 40, which is a part of the second light entrance surface 10B. Each of the light sources 20A and 20B is positioned so as not to face the narrow part 41.

As above mentioned, the area of the cross section of the wide part 40 orthogonal to the longitudinal direction of the light guide member 1 is larger than that of the narrow part 41. Further, the light sources 20A and 20B face the wide part 40. As a result, even if the light sources 20A and 20B are large in size, it is possible to allow substantially entire light from the light sources 20A and 20B to enter through the light entrance surface 10A and 10B. Also, the light guide member 1 can be downsized because the area of the cross section of the narrow part 41 orthogonal to the longitudinal direction of the light guide member 1 is smaller than that of the wide part 40.

Light from the first light source 20A enters the light guide member 1 through the end surface in the longitudinal direction of the wide part 40 which is a part of the first light entrance surface 10A. Light from the second light source 20B enters the light guide member 1 through the end surface in the longitudinal direction of the wide part 40 which is a part of the second light entrance surface 10B.

As shown in FIG. 1, the diffusing part 5A is provided on the reflective surface 11. In the present embodiment, the diffusing part 5A is provided on a projected end surface of the narrow part 41 which is projected from the wide part 40. In this regard, the projected end surface of the narrow part 41 is an apical surface of the narrow part 41 which is projected from the wide part 40. The projected end surface of the narrow part 41 is a plane surface orthogonal to the height direction of the light guide member 1. The diffusing part 5A extends over an entire longitudinal direction length of the transparent part 4.

As shown in Fig. 4, a cross section of the diffusing part 5A orthogonal to the longitudinal direction has a long rectangular shape extending in the width direction of the light guide member 1. A width of the diffusing part 5A (a length in a direction equivalent to the width direction of the light guide member 1) is wider than a width of the projected end surface of the narrow part 41. Side end parts of the diffusing part 5A in the width direction are projected outward than respective ends in the width direction of the projected end surface of the narrow part 41. The reflectance of the diffusing part 5A is higher than that of the transparent part 4. Light entered the transparent part 4 through the light entrance surfaces 10A and 10B is diffused and reflected by the diffusing part 5A toward the light exit surface 12 (to the wide part 40 side).

The width of the narrow part 41 gradually increases toward the wide part 40 in the height direction of the light guide member 1. The width of the wide part 40 is constant in a region near the light exit surface 12, and the width of the wide part 40 on a side of the narrow part 41 gradually decreases toward the narrow part 41 in the height direction of the light guide member 1. In other words, the width of the transparent part 4 gradually decreases toward the diffusing part 5A.

Each of side surfaces of the narrow part 41 in the width direction is a curved surface, which has, in a cross section orthogonal to the longitudinal direction of the light guide member 1, substantially an arc shape curved and protruded outward of the wide part 41. In detail, the side surfaces of the narrow part 41 are curved surfaces having substantially a parabolic shape in cross section. Therefore, light reached to the side surfaces of the narrow part 41 after being reflected by the diffusing part 5A is likely to be totally reflected by the narrow part 41 to the light exit surface 12 side.

Each of the side surfaces of the wide part 40 in the width direction includes a linear part 400 and a curved part 401. Each of the side surfaces of the wide part 40 of the present embodiment only includes the linear part 400 and the curved part 401.

The linear part 400 is closer to the light exit surface 12 than the curved part 401 is. The linear part 400 is a surface substantially parallel to the height direction of the light guide member 1. The curved part 401 is a curved surface having an arc cross section which is curved so as to be positioned gradually further inward in the width direction of the light guide member 1 toward the narrow part 41, in the longitudinal direction of the light guide member 1. The curved part 401 continues to the linear part 400. The curved part 401 is connected to an end part, on the light exit surface 12 side, of a corresponding side surface of the narrow part 41. An internal corner part, which is recessed inward, of the light guide member 1 is defined by the curved part 401 and the side surface of the narrow part 41.

Part of light reached the wide part 40 after being reflected by the diffusing part 5A and the side surface of the narrow part 41 is likely to be totally reflected by the curved part 401 to the light exit surface 12 side.

The light exit surface 12 is a surface facing a side opposite of the wide part 40 from the narrow part 41 (opposite from the diffusing part 5A). The light exit surface 12 extends over the entire length of the transparent part 4 in the longitudinal direction. Light reflected by the diffusing part 5A to the wide part 40 side is allowed to exit through the light exit surface 12.

A part of the light exit surface 12, excluding end parts in the width direction of the light guide surface 12, is a concaved surface 124. The concaved surface 124 is concaved so as to be positioned further closer to the diffusing part 5A in the height direction of the light guide member 1 toward a central part of the concaved surface 124 in the width direction. In a cross section of the concaved surface 124 orthogonal to the longitudinal direction of the light guide member 1, the concaved surface 124 has an arc shape curved inwardly toward the diffusing part 5A. Since that, light exiting through the light exit surface 12 mostly are refracted toward the outside in the width direction of the light guide member 1. Therefore, it is possible for the light exiting through the light exit surface 12 to illuminate an area wider than that of the light exit surface 12.

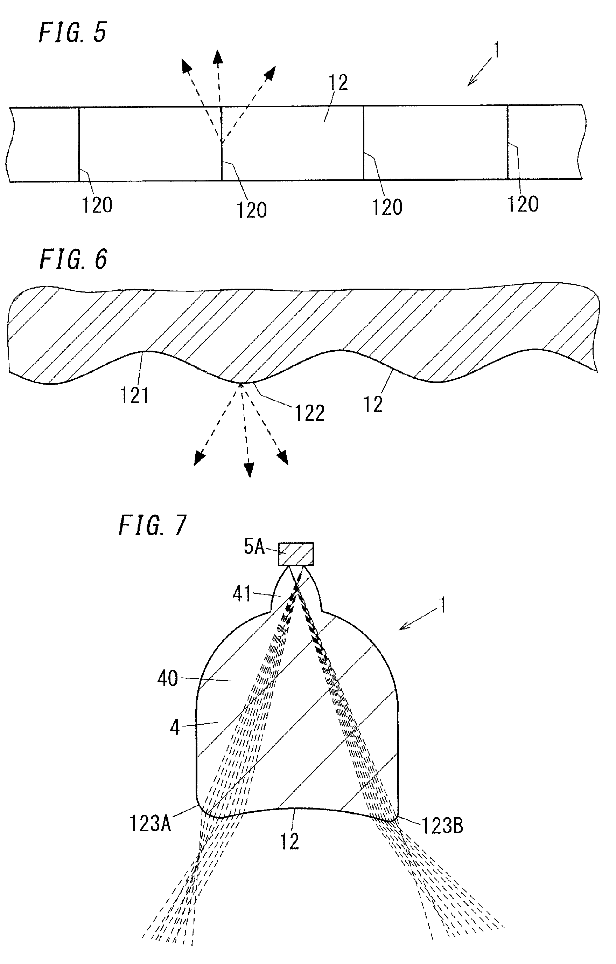

Note that, cross section of the light exit surface 12 of the present embodiment is uniform in the longitudinal direction of the transparent part 4, but it can change in the longitudinal direction of the light guide member 1 as shown in Fig. 5 and Fig. 6. In an example shown in Fig. 5, lines 120 which are very fine are provided on multiple points in the longitudinal direction of the light exit surface 12. Each of the lines 120 is a groove or a ridge. Each of the lines 120 extends in parallel to the width direction of the light exit surface 12, and extends over entire length in the width direction of the light exit surface 12. Each of the lines 120 is formed by for example, a flow mark occurred during the extrusion of the light guide member 1. With the lines 120 provided on the light exit surface 12, it is possible to diffuse light in the longitudinal direction of the light guide member 1 by the lines 120, as shown by arrows in Fig. 5.

In an example shown in Fig. 6, the light exit surface 12 is formed in a wavelike shape having concave portions 121 and convex portions 122 arranged alternatingly. The light exit surface 12 having the wavelike shape is formed for example, by molding sink occurred during molding of the light guide member 1. It is possible to diffuse the light exiting through the light exit surface 12 to the longitudinal direction of the light guide member 1 by forming the light exit surface 12 in the wavelike shape in this manner.

As shown in Fig. 4, the light exit surface 12 includes a pair of curved surfaces 123A and 123B. The curved surface 123A is provided on one end part in the width direction of the light exit surface 12, and the curved surface 123B is provided on the other end part in the width direction of the light exit surface 12. The curved surfaces 123A and 123B are each curved so as to be positioned further closer to the diffusing part 5A in the height direction of the light guide member 1 toward an outer side of the light exit surface 12 in the width direction.

The curved surfaces 123A and 123B are located on outer sides than the diffusing part 5A in the width direction of the light guide member 1. The curved surfaces 123A and 123B are corner parts connecting the light exit surface 12 and the respective side surfaces of the wide part 40 (more precisely the linear parts 400).

In the cross section of the light exit surface 12 orthogonal to the longitudinal direction of the light guide member 1, the curved surfaces 123A and 123B have arc shapes having same radius of curvature and each central angle is substantially 90°. The concaved surface 124 of the light exit surface 12 and a side surface of the wide part 40 on a side of the curved surface 123A are formed continuously through the curved surface 123A without forming a corner. The concaved surface 124 of the light exit surface 12 and a side surface of the wide part 40 on a side of the curved surface 123B are formed continuously through the curved surface 123B without forming a corner.

Broken lines in Fig. 4 show rays of light reflected by the diffusing part 5A which was obtained by an analysis. As shown in Fig. 4, light that reaches the curved surfaces 123A, 123B traveled from the diffusing part 5A is scattered by the curved surface 123A, 123B and exit to the outside. In this case, the curved surfaces 123A and 123B give some diffusivity to the light exiting through the end parts of the light exit surface 12. That is, as to light travels from the diffusing part 5A to the light exit surface 12 while expanding in the width direction of the light guide member 1, part of the light that reaches the curved surface 123A, 123B is diffused and refracted by the curved surface 123A, 123B toward the center of the light exit surface 12 in the width direction. Since that, in an outer side part in the width direction of a region illuminated by the light exited from the light exit surface 12, the luminance of the light gradually decreases towards an outer side.

As shown in Fig. 7, radii of curvature of the curved surfaces 123A and 123B can be different from each others. Broken lines in Fig. 7 show rays of light reflected by the diffusing part 5A which was obtained by an analysis. As shown in Fig. 7, when radii of curvature of the curved surfaces 123A and 123B are different, the curved surfaces 123A and 123B shows different scattering properties of light. That is, light distribution characteristics of the light exiting from the light exit surface 12 are different between the opposite end parts in the width direction of the light exit surface 12.

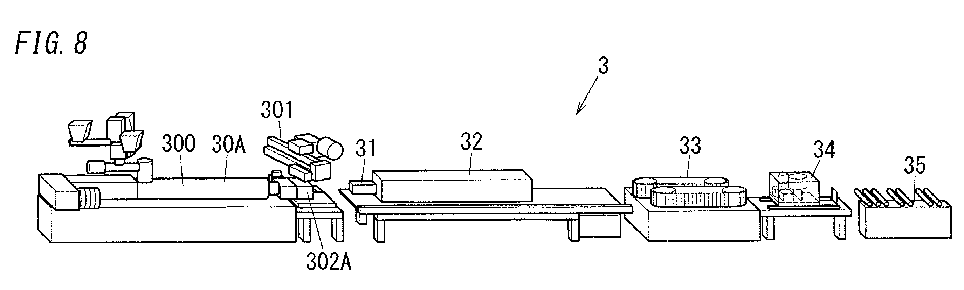

Next, a manufacturing apparatus 6 for the light guide member 1 is explained. The manufacturing apparatus 6 which is a production line of the light guide member 1 of the present embodiment is shown in Fig. 8.

The manufacturing apparatus 6 includes an extruder 30A, a sizing 31, a water tank 32, a caterpillar haul-off 33, a cutter 34, and an arranging machine 35.

The extruder 30A is a double extruder, and an extrusion die 302A is provided on an end of the extruder 30A. The extruder 30A includes a first extrusion machine 300 and a second extrusion machine 301. The cutter 34 conducts cutting by for example, the irradiation of a carbon dioxide gas laser (CO₂ laser) with output of 100 W.

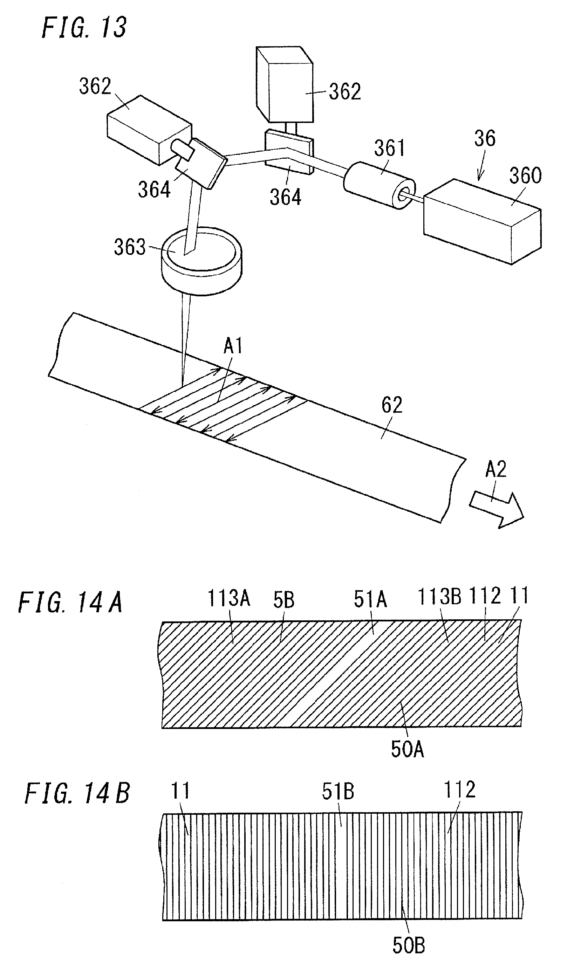

The sizing 31, the water tank 32, the caterpillar haul-off 33, the cutter 34, and the arranging machine 35 are arranged in this order in an extrusion direction of an extruded product 62 which is extruded from the extruder 30A (see Fig. 13). In other words, the extruder 30A, the sizing 31, the water tank 32, the caterpillar haul-off 33, the cutter 34, and the arranging machine 35 are arranged in this order from the upstream of the production line.

A production method for the light guide member 1 of the present embodiment includes an extrusion step, a sizing step, a cooling step, a pulling step, a cutting step, and an arranging step.

In the extrusion step, the extruded product 62 is molded through a double extrusion of the extruder 30A. In this extrusion, a synthetic resin material for the transparent part 4 is plasticized by the first extrusion machine 300 and extruded from the extrusion die 302A, and in parallel thereto, a synthetic resin material for the diffusing part 5A is plasticized by the second extrusion machine 301 and extruded from the extrusion die 302A. In this process, the extruded product 62 having the synthetic resin material for the transparent part 4 and the synthetic resin material for the diffusing part 5A integrally is extruded through the extrusion die 302A into a downstream of the production line. Note, the cutting process, in other words a process of cutting the extruded product 62 which is extruded from the extruder 30A continuously in a desired length, which will be explained later, is not included in the extrusion step.

In the pulling step, the extruded product 62 which is an intermediate product as being extruded through the extrusion die 302A, is pulled by the caterpillar haul-off 33. In this manner, the extruded product 62 passes through the sizing 31 and the water tank 32 accordingly. In other words, the light guide member 1 is produced through steps in an order of the extrusion step with the extruder 30A, the sizing step with the sizing 31, the cooling step at the water tank 32, and an arranging step by the arranging machine 35.

In the sizing step, the sizing 31 shapes the extruded product 62 into a predetermined size while the extruded product 62 passes through the sizing 31. In this way, after passing through the sizing 31, the extruded product 62 has same cross section as the light guide member 1 which is the manufactured product.

In the cooling step, the extruded product 62 passes through the water tank 32. In this manner, the extruded product 62 is cooled and solidified by water in the water tank 32. As explained, after passing through the extrusion die 302A, the sizing 31 and the water tank 32 in this order, the extruded product 62 passes through the caterpillar haul-off 33, and then reaches the cutter 34.

In the cutting step, the extruded product 62 is cut by laser irradiated from the cutter 34 while being pulled in the extrusion direction by the caterpillar haul-off 33. In other words, the cutting step is a step conducted in parallel (step conducted in-line) to the extrusion step. In detail, a laser cutting in the cutting step is conducted to the extruded product 62 (before cut in the desired length) which is being extruded continuously from the extruder 30A.

More specifically, the carbon dioxide gas laser is irradiated by the cutter 34 on the extruded product 62 which are passing the cutter 34 from a direction orthogonal to a longitudinal direction of the extruded product 62, so that the extruded product 62 is cut in the direction orthogonal to the longitudinal direction thereof. As a result, light guide members 1 including the transparent part 4 and the diffusing part 5A and having the desired length can be cut out. In the light guide members 1 cut out in this way, each of the end surfaces in a longitudinal direction of the light guide members 1 (the light entrance surfaces 10A and 10B) has an entirely smooth surface resulting from the fusion by the laser emitted from the cutter 34.

In the arranging step, the light guide members 1 which were cut out as above mentioned manner are sequentially arranged and provided by the arranging machine 35.

### (Second embodiment)

Next Second embodiment is explained. Hereinafter, elements having similar functions to those in the first embodiment are assigned with same names and reference numerals, and duplicated descriptions thereof will be omitted.

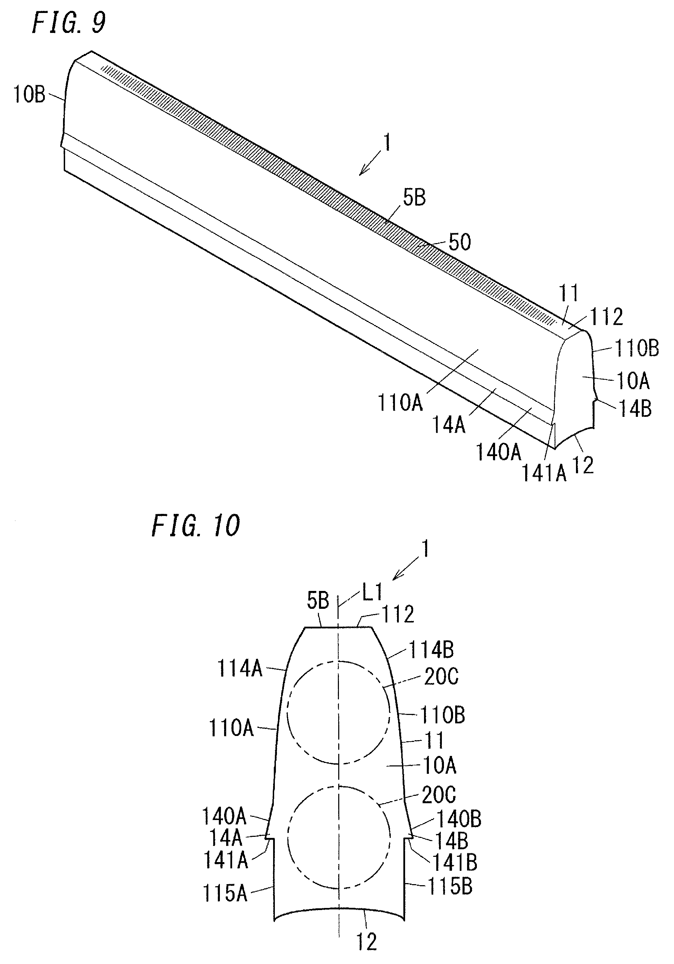

A light guide member 1 of the present embodiment shown in Fig. 9 is produced by a mono extrusion of a synthetic resin with translucency. The light guide member 1 is for example, formed from same material as the transparent part 4 of the first embodiment.

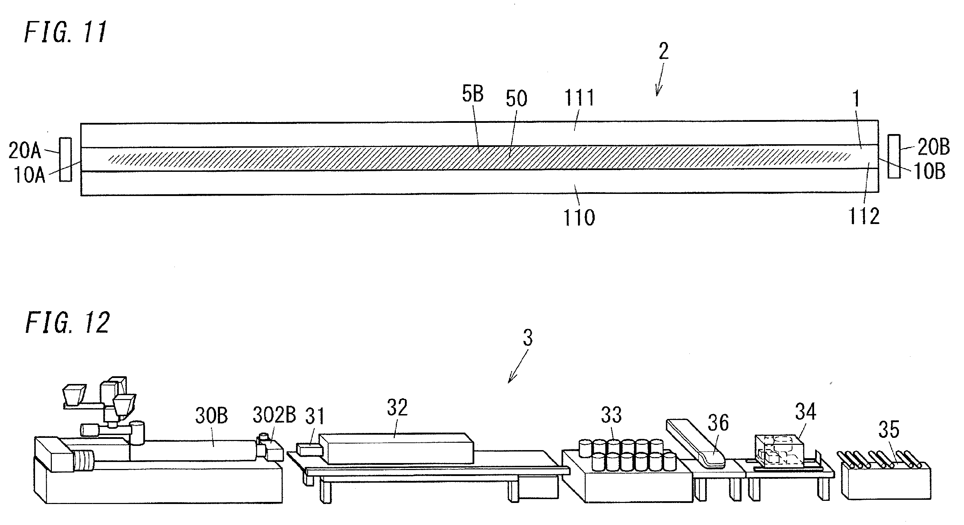

The light guide member 1 of the present embodiment is used for example as a part of a lighting device, similar to the first embodiment. Fig. 11 is an explanatory diagram of a lighting device 2 which includes the light guide member 1 of the present embodiment.

As shown in Fig. 9, a cross section orthogonal to a longitudinal direction of the light guide member 1 of the present embodiment has an elongated shape extending in a height direction of the light guide member 1.

Similar to the first embodiment, a reflective surface 11 of the light guide member 1 is a part of an outer peripheral surface of the light guide member 1, excluding a light exit surface 12. Hereinafter, a part of the reflective surface 11 of the light guide member 1 serving as one side part of the light guide member 1 in a width direction is referred to as a side surface part 110A, and a part of the reflective surface 11 of the light guide member 1 serving as the other side part of the light guide member 1 in the width direction is referred to as a side surface part 110B. Also, a part of the reflective surface 11 serving as an end surface part in a height direction on an opposite side of the light guide member 1 from the light exit surface 12 is referred to as an end surface part 112.

The reflective surface 11 of the present embodiment is constituted by the end surface part 112 and the side surface parts 110A and 110B. The end surface part 112 of the reflective surface 11 is orthogonal to the height direction of the light guide member 1. A width of the end surface part 112 is narrower than that of the light exit surface 12.

A diffusing part 5B is formed on the end surface part 112 of the reflective surface 11. The diffusing part 5B is provided over an entire length of a longitudinal direction of the light guide member 1.

The diffusing part 5B is formed with an irregular part made by roughening the end surface part 112. Specifically, the diffusing part 5B includes a plurality of cut grooves 50 provided on the end surface part 112, and the plurality of cut grooves 50 forms the irregular part. In the present embodiment, the plurality of cut grooves 50 are provided on the end surface part 112 of the light guide member 1. Each of the plurality of cut grooves 50 extends in a direction crossing the longitudinal direction of the light guide member 1. The plurality of cut grooves 50 are provided on the end surface part 112 in equal intervals.

Each of the plurality of cut grooves 50 is formed by laser irradiation from an outside on the end surface part 112 of the light guide member 1 which is flat to cut the irradiated part thereof. The plurality of cut grooves 50 are parallel to each other. A length direction of each of the plurality of cut grooves 50 is inclined in a specific angle to the width direction of the light guide member 1. Note that, the plurality of cut grooves 50 can be parallel to the width direction of the light guide member 1.

In the present embodiment, cut grooves 50 formed on a middle part (in detail a central part) of the light guide member 1 in the longitudinal direction are extended over entire width direction of the end surface part 112. Cut grooves 50 closer to ends of the light guide member 1 in the longitudinal direction are further shorter than those in the middle part. In other words, a width of the diffusing part 5B gradually decreases from the middle part to the opposite ends in the longitudinal direction of the light guide member 1.

Light entered the light guide member 1 through a light entrance surface 10A or 10B is less likely to reach the middle part of the light guide member 1 in the longitudinal direction which is distanced from the light entrance surfaces 10A and 10B. However, as explained above, when cut grooves 50 closer to the opposite ends of the light guide member 1 in the longitudinal direction have shorter lengths than those of cut grooves 50 in the middle part, a part of the diffusing part 5B near the central part is more likely to cause reflection to the light exit surface 12 side than parts thereof near the ends are. Since that, it is possible to substantially even an amount of light exits through the light exit surface 12 in the longitudinal direction of the light guide member 1.

Note that, the lengths of the plurality of cut grooves 50 can be uniform so that the width of the diffusing part 5B be constant in the longitudinal direction of the light guide member 1. Also, the plurality of cut grooves 50 can be formed over an entire region of the end surface part 112 of the reflective surface 11. Also, the diffusing part 5B is not limited to above as long as it is formed as the irregular part on a part of the reflective surface 11, and the irregularity can be for example, a plurality of holes formed in the reflective surface 11 by laser.

Also, although not shown in the drawings, a groove width of each of the plurality of cut grooves 50 gradually decreases toward a groove bottom thereof which is closer to the light exit surface 12

Light reaching the diffusing part 5B after entering the light guide member 1 through the light entrance surfaces 10A and 10B strikes side surfaces of the plurality of grooves 50 in the end surface part 112, thereby being diffused and reflected to the side of the light exit surface 12 and the sides of the side surface parts 110A and 110B, positioned on opposite sides, of the reflective surface 11. Further, light reflected by the end surface part 112 with the diffusion part 5B and reached to the side surface parts 110A and 110B of the reflective surface 11 is reflected to the light exit surface 12 side.

As shown in Fig. 10, the side surface part 110A includes a first part 114A which is connected to the end surface part 112, and a second part 115A which connects the first part 114A and the light exit surface 12. Also, the side surface part 110B includes a first part 114B which is connected to the end surface part 112, and a second part 115B which connects the first part 114B and the light exit surface 12.

Each of the first part 114A and 114B is a curved surface having an arc shape curving toward an outside of the light guide member 1 when viewed in the longitudinal direction of the light guide member 1, and is curved so as to be positioned further outer side in the width direction of the light guide member 1 toward the light exit surface 12. In detail, each of the first parts 114A and 114B is a parabolic surface when viewed in the longitudinal direction of the light guide member 1. Since that, a width of the light guide member 1 near the end surface part 112 gradually decreases toward the end surface part 112.

Light reached the first parts 114A and 114B which travelled from the light entrance surfaces 10A and 10B and the end surface part 112 is likely to be reflected toward the light exit surface 12 because as it has been explained, the first parts 114A and 114B are in parabolic surface. Also, leaking out of light reached the first parts 114A and 114B which travelled from light the light entrance surfaces 10A and 10B and the end surface part 112 is unlikely to happen.

A projection 14A which is projected toward the outside in the width direction of the light guide member 1 is formed on the second part 115A. A projection 14B which is projected toward the outside in the width direction of the light guide member 1 is formed on the second part 115B.

Each of the projections 14A and 14B is a part to be hung on and fixed to another member when the light guide member 1 is attached to this member. As shown in the Fig. 9, each of the projections 14A and 14B extends over the entire length of the light guide member 1 in the longitudinal direction.

As shown in Fig. 10, a cross section of each of the projections 14A and 14B orthogonal to the longitudinal direction of the light guide member 1 has a right-angled triangle shape. A surface 140A of the projection 14A on a side of the end surface part 112 is inclined so as to be positioned further closer to the light exit surface 12 toward outside of the light guide member 1 in the width direction of the light guide member 1. A surface 140B of the projection 14B on a side of the end surface part 112 is inclined so as to be positioned further closer to the light exit surface 12 toward outside of the light guide member 1 in the width direction of the light guide member 1. A surface 141A of the projection 14A on a side of the light exit surface 12 is orthogonal to the height direction of the light guide member 1. A surface 141B of the projection 14B on a side of the light exit surface 12 is orthogonal to the height direction of the light guide member 1.

Note that, the cross section of each of the projections 14A and 14B is not limited to the right-angled triangle shape. For example, each of the projections 14A and 14B can be in an isosceles triangle, a semicircle, or a right-angled triangle of which surface on the side of the light exit surface 12 is inclined so as to be positioned further closer to the reflective surface 11 toward outside of the light guide member 1 in the width direction of the light guide member 1.

A part of the second part 115A of the side surface part 110A, excluding the projection 14A, has a linear line shape parallel to the height direction of the light guide member 1 when viewed in the longitudinal direction of the light guide member 1. A part of the second part 115B of the side surface part 110B, excluding the projection 14B, has a linear line shape parallel to the height direction of the light guide member 1 when viewed in the longitudinal direction of the light guide member 1.

Note that, a part of the side surface part 110A on a side of the light exit surface 12 can be curved so as to continue to a part of the side surface part 110A on a side of the end surface part 112. A part of the side surface part 110B on a side of the light exit surface 12 can be curved so as to continue to a part of the side surface part 110B on a side of the end surface part 112.

Also, the first parts 114A and 114B are non-recessed surfaces which are not recessed inwardly and also have no projected portions projected outwardly like the projections 14A and 14B. Therefore, it is possible for the first parts 114A and 114B to efficiently reflect light from the end surface part 112 toward the light exit surface 12.

As shown in Fig. 10, the light exit surface 12 of the present embodiment is a recessed surface having an arc-shaped cross section in an entire width direction thereof.

As shown in Fig. 10, in a case where the light guide member 1 of the present embodiment is included in a lighting device 2, for example, a plurality of light sources 20C can be provided on each of the light entrance surfaces 10A and 10B. In a case shown in Fig. 10, two light sources 20C are provided on each of the light entrance surfaces 10A and 10B and arranged in the height direction of the light guide member 1.

A manufacturing apparatus 6 for the light guide member 1 of the present embodiment shown in Fig. 12 includes an extruder 30B, instead of the extruder 30A explained in the first embodiment. Also, the manufacturing apparatus 6 includes a laser processing machine 36 as well as the extruder 30B, a sizing 31, a water tank 32, a caterpillar haul-off 33, a cutter 34 and an arranging machine 35.

The extruder 30B is a mono extruder. An extrusion die 302B is provided on an end of the extruder 30B.

The laser processing machine 36 is on a position which is a downstream side to the caterpillar haul-off 33, but an upstream side to the cutter 34 in a extrusion direction of an extruded product 62. In other words, the laser processing machine 36 is provided between the caterpillar haul-off 33 and the cutter 34 in a production line.

A laser steering method of the laser processing machine 36 is galvanometer scanning. As shown in Fig. 13, the laser processing machine 36 includes a laser oscillator 360, a beam expander 361, a plurality of galvanometer scanners 362, and a fθ lens 363. The laser processing machine 36 is configured to emit for example a carbon dioxide gas laser (CO₂ laser) beam with about output of 30 W.

A production method for the light guide member 1 of the present embodiment includes a diffusing part forming step (machining step) in addition to an extrusion step, a sizing step, a cooling step, a pulling step, a cutting step, and an arranging step.

In the extrusion step, the extruded product 62 is molded through a mono extrusion of the extruder 30B. In this extrusion, the extruder 30B plasticizes a synthetic resin material for the light guide member 1 and extrudes the plasticized material from the extrusion die 302B.

In the diffusing part forming step, laser is irradiated from the laser processing machine 36 on the extruded product 62 which is being pulled in the extrusion direction by the caterpillar haul-off 33. Thereby, the plurality of cut grooves 50 (irregular part) is formed by the laser irradiated from the laser processing machine 36 on a part, constituting the end surface part 112 of the reflective surface 11, of the extruded product 62. In other words, in the present embodiment, the diffusing part forming step is a step conducted in parallel (step conducted in-line) to the extrusion step. In detail, formation of the plurality of cut grooves 50 by the laser in the diffusing part forming step is conducted to the extruded product 62 (which is not cut in the desired length) which is being extruded continuously from the extruder 30B.

In more detail, the laser processing machine 36 performs scanning of the laser beam based on a preset processing pattern by driving mirrors 364 of the galvanometer scanners 362, thereby forming the plurality of cut grooves 50 with the scanned laser bean. A scanning direction of the laser is indicated by arrows A1 in Fig. 13. Also in Fig. 13, a moving direction of the extruded product 62 (extrusion direction) is indicated by an arrow A2.

Further, as examples shown in Figs. 14A and 14B, the diffusing part 5B can be formed so that the width thereof in the longitudinal direction of the light guide member 1 is constant. A plurality of cut grooves 50A which have same lengths is formed on the end surface part 112 of the reflective surface 11 shown in Fig. 14A. A plurality of cut grooves 50B which have same lengths is formed on the end surface part 112 of the reflective surface 11 shown in Fig. 14B.

If such a diffusing part 5B is formed based on a preset processing pattern that has a limited region, a cycle of scanning of the laser beam based on the preset processing pattern have to be repeated. Therefore, as shown in FIG. 14A for example, there is a possibility that a space 51A where no cut groove 50A is formed is formed between a processing area 113A processed in one cycle of scanning of the laser beam and a processing area 113B processed in the next one cycle of scanning of the laser beam.

If a length direction of the plurality of cut grooves 50B is parallel to the width direction of the light guide member 1 as shown in FIG. 14B, a length direction of a space 51B where no cut groove 50B is formed is parallel to the width direction of the light guide member 1. In this case, a part of the light exit surface 12 which corresponds to the space 51B may be darker than other part because a part corresponding to the space 51B of the light guide member 1 in the longitudinal direction would less likely to cause a diffusion of light partially, and thus this darkened part may be noticeable.

Therefore, as shown in Fig. 14A, it is preferable that the length direction of the plurality of cut grooves 50A are parallel to each other and inclined to the width direction of the light guide member 1. In this case, the space 51A inclined to the width direction of the light guide member 1 is formed between processing areas 113A and 113B of the end surface part 112 of the light guide member 1. At least one cut groove 50 is formed on a part of the light guide member 1 outside the space 51A in the width direction of the light guide member 1. Therefore, parts of the light exit surface 12 which correspond to the space 51A and outer side parts in the width direction of the light guide member 1 emit light. Consequently, it is possible to suppress noticeability of the part of the light exit surface 12 corresponding to the space 51A.

Also, when the length direction of the plurality of cut grooves 50A is inclined to the width direction of the light guide member 1, it is unlikely that light entering the light guide member 1 through the light entrance surfaces 10A and 10B and then reaching side surfaces of the plurality of cut grooves 50A leaks to outside the light guide member 1. That is, if the length direction of the plurality of cut grooves 50B is parallel to the width direction of the light guide member 1 as shown in Fig. 14B, an angle of incidence of the light entering the light guide member 1 through the light entrance surfaces 10A and 10B to a side surface of the cut groove 50B is small and thus the light likely to leak to the outside of the light guide member 1. However, as shown in Fig. 14A, when the length direction of the plurality of cut grooves 50A is inclined to a direction orthogonal to the width direction of the light guide member 1, an angle of incidence of the light is large and thus the light reached to a side surface of the cut groove 50 is likely to be reflected. Therefore, light leakage of the light guide member 1 is suppressed and the light exit surface 12 of the light guide member 1 can emit light efficiently.

As above explained, each of the light guide members 1 in accordance with the first and the second embodiments includes the following first aspect. The light guide member 1 has an elongated shape. The light guide member 1 has opposite end surfaces in the longitudinal direction of the light guide member 1, and at least one of the opposite end surfaces serves as the light entrance surface 10A to be struck by light. The light guide member 1 is of the extruded product formed by extruding synthetic resin. The light entrance surface 10A is a cut surface resulting from laser cutting on the extruded product.

Accordingly, light guide members 1 of different lengths can be produced by simply changing a cutting position of the extruded product 62 formed by an extrusion. In this way, there is no need to prepare two or more dies for producing light guide members in different lengths, unlike a case of producing light guide members 1 by an injection molding. Therefore, it is possible to suppress increase in a production cost of the light guide members 1. Also, forming the light entrance surfaces 10A and 10B through the laser cutting enables the light entrance surfaces 10A and 10B to be smooth. Therefore, it is possible to suppress occurrence of diffused reflection of light at the light entrance surfaces 10A and 10B.

The light guide member 1 in accordance with the second embodiment includes the following second aspect realized in combination with the first aspect. The light guide member 1 includes the reflective surface 11 and the light exit surface 12. The reflective surface 11 extends along the longitudinal direction of the light guide member 1 and is for reflecting light entering the light guide member 1 through the light entrance surface 10A. The light exit surface 12 extends along the longitudinal direction of the light guide member 1 and is for allowing light, reflected by the reflective surface 11, to emerge outside. The reflective surface 11 includes the diffusing part 5B for diffusing light. The diffusing part 5B includes the irregular part (cut grooves 50) resulting from laser irradiation on part of the reflective surface 11.

The diffusing part 5B of this light guide member 1 can be provided by forming the irregular part on the reflective surface 11 with laser irradiation. Therefore, compared for example to a case where the diffusing part 5B is formed by printing which requires additional preoperational steps such as masking, it is possible to improve productivity of production for the light guide member 1.

Also, a production method for the light guide member 1 in accordance with each of the first embodiment and the second embodiment includes the following third aspect. The production method is for the light guide member 1 including the first or second aspect. The production method includes the extrusion step and the cutting step. In the extrusion step the extruded product 62 is molded by extrusion. In the cutting step, the light guide member 1 having a desired length is produced by conducting laser cutting to cut the extruded product 62 molded in the extrusion step with the laser.

In the production method for the light guide member 1, the light guide member 1 having an elongated shape can be produced by cutting, in the cutting step, the extruded product 62 produced in the extrusion step. Also, light guide members 1 of different lengths can be produced by simply changing a cutting position of the extruded product 62 in the cutting step. In this way, there is no need to prepare two or more dies for producing light guide members in different lengths, unlike a case of producing light guide members by an injection molding. Therefore, it is possible to suppress increase in a production cost of the light guide members. Also, forming the light entrance surfaces 10A and 10B through the laser cutting conducted in the cutting step by laser cutting on the extruded product 62 enables the light entrance surfaces 10A and 10B to be smooth. Therefore, it is possible to suppress occurrence of diffused reflection of light at the light entrance surfaces 10A and 10B. Further, it is possible to easily form the light entrance surface 10A at which diffused reflection is less likely to occur.

Also, the production method for the light guide member 1 in accordance with each of the first embodiment and the second embodiment includes the following fourth aspect realized in combination with the third aspect. The laser cutting of the cutting step is conducted along with the extrusion step. That is, the laser cutting of the cutting step and the extrusion step are conducted in-line.

In the production method for the light guide member 1, it is possible to omit a process such as cutting the extruded product 62 by laser after having cut the extruded product 62 with a cutting blade or the like.

Also a production method for the light guide member 1 in accordance with the second embodiment includes the following fifth aspect. The production method is for the light guide member 1 including the second aspect. The production method includes the extrusion step, the diffusing part forming step, and the cutting step. In the extrusion step, the extruded product is molded by extrusion. In the diffusing part forming step, the irregular part is formed by laser irradiation on part of the surface, which constitutes the reflective surface 11 of the light guide member 1, of the extruded body 62. In the cutting step, the light guide member 1 having a desired length is produced by cutting the extruded product 62 with laser.

In the production method for the light guide member 1, the light guide member 1 having an elongated shape can be produced by cutting, in the cutting step, the extruded product 62 produced in the extrusion step. Also, light guide members 1 of different lengths can be produced by simply changing a cutting position of the extruded product 62 in the cutting step. In this way, there is no need to prepare two or more dies for producing light guide members in different lengths, unlike a case of producing light guide members by an injection molding. Therefore, it is possible to suppress increase in a production cost of the light guide members. Also, forming the light entrance surfaces 10A and 10B through the laser cutting conducted in the cutting step by laser cutting on the extruded product 62 enables the light entrance surface 10A to be smooth. Therefore, it is possible to suppress occurrence of diffused reflection of light at the light entrance surface 10A. Further, it is possible to easily form the light entrance surface 10A at which diffused reflection is less likely to occur. The diffusing part 5B can be provided by forming the irregular part on the reflective surface 11 with laser irradiation. Therefore, compared for example to a case where the diffusing part 5B is formed by printing which requires additional preoperational steps such as masking, it is possible to improve productivity of production for the light guide member 1.

Also the production method for the light guide member 1 in accordance with the second embodiment includes the following sixth aspect realized in combination with the fifth aspect. The laser irradiation of the diffusing part forming step is conducted along with the extrusion step. That is, the diffusing part forming step and the extrusion step are conducted in-line. With this production method it is possible to further improve the productivity.

Also, the production method for the light guide member 1 in accordance with the present invention includes the following seventh aspect realized in combination with the sixth aspect. In the diffusing part forming step, the laser irradiation on the surface, constituting the reflective surface 11 of the light guide member 1, of the extruded product 62, is conducted so as to form the plurality of cut grooves 50. In the production method for the light guide member 1, the diffusing part 5B can be formed easily by using the laser processing machine 36 which is configured to conduct laser cutting by scanning the laser beam.

Any of the second to seventh aspects can be added to the first aspect optionally.

Also, the light guide member 1 may be provided with the diffusing part 5B of the second embodiment in place of the diffusing part 5A of the first embodiment. Further, a substance with reflectivity can be provided on a surface, opposite to the light exit surface 12, of the light guide member 1 by printing or deposition, in place of the diffusing part 5A of the first embodiment or the diffusing part 5B of the second embodiment. Furthermore, cross sections of the light guide member 1 of the first embodiment and the second embodiment can be a circle or a rectangle shape.

Also, designs of the manufacturing apparatus 6 of the first embodiment and the second embodiment can be modified as appropriate.

Also, in the first embodiment and the second embodiment, it is possible to produce the light guide member 1 by cutting the extruded product 62 with means other than laser, and then cutting the cut extruded product 62 with laser. Also, in the second embodiment, the plurality of cut grooves 50 can be formed by irradiating laser to the extruded product 62 after cutting.

Although the present invention has been described with reference to certain preferred embodiments, numerous modifications and variations can be made by those skilled in the art without departing from the true spirit and scope of this invention, namely claims.

## Claims

1. A light guide member having an elongated shape,
the light guide member comprising opposite end surfaces in a longitudinal direction of the light guide member, at least one of the opposite end surfaces serving as a light entrance surface to be struck by light,
the light guide member being of an extruded product formed by extruding synthetic resin, and
the light entrance surface being a cut surface resulting from laser cutting on the extruded product.

2. The light guide member of claim 1 further comprising:
a reflective surface; and
a light exit surface,
the reflective surface extending along the longitudinal direction of the light guide member and being for reflecting light entering the light guide member through the light entrance surface,
the light exit surface extending along the longitudinal direction of the light guide member and being for allowing light, reflected by the reflective surface, to emerge outside,
the reflective surface including a diffusing part for diffusing light, and the diffusing part including an irregular part resulting from laser irradiation on part of the reflective surface.

3. A production method for the light guide member of claim 1 or 2, the production method comprising:
an extrusion step of molding the extruded product by extrusion; and
a cutting step of conducting laser cutting to cut the extruded product molded in the extrusion step with the laser so as to produce the light guide member having a desired length.

4. The production method of claim 3, wherein
the laser cutting of the cutting step is conducted along with the extrusion step.

5. A production method for the light guide member of claim 2, the production method comprising;
an extrusion step of molding the extruded product by extrusion,
a diffusing part forming step of forming the irregular part with laser irradiation on part of a surface, constituting the reflective surface of the light guide member, of the extruded body, and
a cutting step of cutting the extruded product with laser to produce the light guide member having a desired length.

6. The production method of claim 5, wherein
the laser irradiation of the diffusing part forming step is conducted along with the extrusion step.

7. The production method of claim 6, wherein
in the diffusing part forming step, the laser irradiation on the surface, constituting the reflective surface of the light guide member, of the extruded product, is conducted so as to form a plurality of cut grooves.
